# EUROPEAN PATENT APPLICATION

(11) **EP 4 563 399 A1**
(43) Date of publication of application: **04.06.2025**
(21) Application number: 24214648.8
(22) Date of filing: 21.11.2024
(51) Int. Cl.: B60L 15/20, B60W 30/19, B60W 50/08, B60W 20/15, B60L 3/00, F16H 59/02, F16H 61/02

(54) **CONTROL SYSTEM FOR ELECTRIC VEHICLE**

(30) Priority: 01.12.2023 JP 2023204157
(71) Applicant: TOYOTA JIDOSHA KABUSHIKI KAISHA, Toyota-shi Aichi 471-8571 (JP)
(72) Inventor: IMAMURA, Tatsuya, TOYOTA-SHI, AICHI, 471-8571 (JP); ISAMI, Yoichiro, TOYOTA-SHI, AICHI, 471-8571 (JP); MOTEKI, Taro, TOYOTA-SHI, AICHI, 471-8571 (JP)
(74) Representative: Cabinet Beau de Loménie

(57) **Abstract**

A control system for an electric vehicle (Ve) configured to allow a driver to virtually enjoy a manual shifting operation of a conventional vehicle having an engine and a transmission and to confirm an actual virtual gear stage even when the virtual gear stage selected by the driver is rejected. A shifting device (4) comprises a shift lever (18) that is moved by the driver to a desired shift position and that returns automatically to a home position (H1, H2) when released. A controller (8) controls the electric vehicle (Ve) based on an electric signal transmitted from the shifting device (4), and indicates the shift position to which the shift lever is moved in the indicator (5).

## Description

### CROSS-REFERENCE TO RELATED APPLICATIONS

The present invention claims the benefit of Japanese Patent Application No. 2023-204157 filed on December 1, 2023 with the Japanese Patent Office, to which the person skilled in the art can refer to when considering the present invention.

### BACKGROUND

### Field of the Invention

Embodiments of the present invention relate to the art of a control system for an electric vehicle in which a motor serves as a prime mover.

### Discussion of the Related Art

JP-A-2022-30862 discloses one example of an electric vehicle that pseudo-realizes a manual gear change operation of a manual transmission vehicle. The electric vehicle described in JP-A-2022-30862 comprises a shift device and a clutch device manipulated by a driver, and a control unit controlling the electric vehicle. In the electric vehicle described in JP-A-2022-30862, a virtual gear stage may be selected from a plurality of stages in which torque characteristics of a motor with respect to a speed of the motor differ stepwise by manipulating the shift device. The control unit is configured to calculate a virtual engine speed based on the virtual gear stage selected by the shift device and an operating amount of the clutch device, and the virtual engine speed calculate by the control unit is indicated on an instrument panel.

JP-A-2021-62647 discloses a gear shift operation device for a vehicle to which a multiple-stage automatic transmission is mounted. In the vehicle described in JP-A-2021-62647, an output torque of an engine is delivered to a multiple-stage automatic transmission through an automatic clutch. The gear shift operation device comprises a control lever that is operated to shift a range position and to execute an upshifting and a downshifting. In a range switchable mode, an operating range is shifted to an R-range by pivoting the control lever in the forward direction, and to a D-range by pivoting the control lever in the backward direction. In a manual transmission mode, the downshifting is executed by pivoting the control lever in the forward direction, and the upshifting is executed by operating the control lever in the backward direction. According to the teachings of JP-A-2021-62647, an operation reaction force when the control lever is manually operated is set larger when the gear change is performed in the manual transmission mode than when the range position is switched in the range switchable mode.

The control lever described in JP-A-2021-62647 serves as a momentary type shift lever when pivoted in the front-and-rear direction, and serves as a stationary type shift lever when pivoted in the left-and-right direction. That is, the control lever returns automatically to the neutral position when an operating force applied to the control lever in the forward direction or backward is cancelled. Whereas, the control lever remains at the position to which the shift lever is pivoted to the right or left direction even after the operating force applied to the control lever in the right or left direction is cancelled.

As described, in order to allow a driver to virtually enjoy a manual shifting operation, the electric vehicle described in JP-A-2022-30862 is provided with the imitation shift device and the imitation clutch device. As the conventional shift devices, the imitation shift device described in JP-A-2022-30862 is a stationary (or alternate) type shift device in which a shift lever keeps its position after operated. Specifically, the imitation shift device has an H-shaped shift pattern, and shift positions in the shift pattern individually correspond to each virtual gear stage.

Since the imitation shift device described in JP-A-2022-30862 is arranged in the electric vehicle merely to select the virtual gear stage, the imitation shift device is connected to a control unit though a shift-by-wire system, instead of being connected to a transmission through a mechanical system. In the electric vehicle described in JP-A-2022-30862, therefore, the motor serving as a prime mover is controlled by the control unit based on an electric command signal transmitted from the imitation shift device. However, when behavior of the electric vehicle or the motor is abnormal, or in the event of failure, the electric vehicle is controlled only by the control unit irrespective of transmission of the command signal from the imitation shift device. In this situation, the motor may not be controlled accurately in accordance with the position of the shift lever. For example, when a speed or a temperature of the motor is raised excessively or when a function of a battery or an inverter is restricted, the command signal transmitted from the imitation shift device may be rejected or updated to execute an alternative control. That is, a speed and an output torque of the motor may not be controlled to establish the virtual gear stage corresponding to the position of the shift lever. In this case, therefore, the driver may feel a gap between an operation of the shift lever and an actual change in the behavior of the electric vehicle.

### SUMMARY

Aspects of embodiments of the present invention have been conceived noting the foregoing technical problems, and it is therefore an object of the present invention to provide a control system for an electric vehicle configured to allow a driver to virtually enjoy a manual shifting operation while confirming an actual virtual gear stage or operating mode in all situations.

The present invention relates to the art of a control system for an electric vehicle comprising a motor that serves as a prime mover, and a shifting device that is operated manually by a driver. In the electric vehicle, a drive force to propel the electric vehicle is established by delivering an output torque of the prime mover to a drive wheel, and the drive force is controlled by controlling the output torque of the prime mover in accordance with the operation of the shifting device. The shifting device comprises: a first shift gate in which a first home is connected to each shift position through a plurality of slots; and a shift lever that is moved by the driver to a desired shift position through the slots of the first shift gate, and that returns automatically to the first home when an operating force applied thereto is cancelled. In order to achieve the above-explained objective, according to the exemplary embodiment of the present invention, the control system is provided with an indicator that indicates a predetermined information, and a controller that controls the electric vehicle. The controller is configured to: control the electric vehicle based on an electric signal transmitted from the shifting device; and indicate the shift position to which the shift lever is moved in the indicator.

In a non-limiting embodiment, the electric vehicle may further comprise an accelerator pedal that is operated by the driver to control the drive force to propel the electric vehicle. The shift lever may be moved by the driver to the desired shift position to select a virtual gear stage from a plurality of stages corresponding to the respective shift positions in the first shift gate. The controller may be further configured to: calculate a virtual drive force to propel the electric vehicle based on a virtual engine torque calculated based on a position of the accelerator pedal with reference to a torque map corresponding to the virtual gear stage selected by operating the shift lever; and control the output torque of the prime mover to achieve the virtual drive force.

In a non-limiting embodiment, an operating mode of the electric vehicle may be selected from: a manual shifting mode in which the virtual gear stage is selected manually by operating the shift lever within the first shift gate, and the drive force to propel the vehicle is controlled by controlling the output torque of the prime mover in accordance with the selected virtual gear stage; and an automatic mode in which the operating mode is further selected from a plurality of modes, and the drive force to propel the vehicle is controlled by controlling the output torque of the prime mover based on a required drive force to propel the vehicle. The shifting device may further comprise: a second shift gate in which a second home is connected to each shift position corresponding to the respective operating modes available in the automatic mode through a plurality of slots; and a connection gate connecting the first home and the second home. The shift lever may be allowed to move between the first home and the second home through the connection gate so that the manual shifting mode is selected by positioning the shift lever at the first home, and the automatic mode is selected by positioning the shift lever at the second home. The operating mode of the electric vehicle in the automatic mode may be selected by operating the shift lever within the second shift gate. The shift lever moved to the desired shift position through the slots of the second shift gate may return automatically to the second home when the operating force applied thereto is cancelled, and the shift lever moved between the first home and the second home through the connection gate stays at the first home or the second home even after the operating force applied thereto is cancelled.

In a non-limiting embodiment, the connection gate may include a horizontal slot and a longitudinal slot (e.g. a vertical slot) so that the shift lever makes a turn when moved between the first home and the second home.

In a non-limiting embodiment, the shifting device may further comprise an actuator that moves the shift lever from the first home to the second home through the connection gate. The controller may be further configured to shift the operating mode from the manual shifting mode to the automatic mode by actuating the actuator to move the shift lever from the first home to the second home, when an operation of the vehicle is terminated intentionally by the driver, or when the virtual gear stage selected by operating the shift lever in the manual shifting mode is rejected by another control executed at the same time by the controller.

In a non-limiting embodiment, the control system may further comprise an imitation clutch pedal that is operated by the driver. The shift lever may be allowed to move within the first shift gate in conjunction with an operation of the imitation clutch pedal. The controller may be further configured to: calculate a virtual torque transmitting capacity in accordance with a depression of the imitation clutch pedal; calculate the virtual drive force to propel the electric vehicle based on the virtual engine torque and the virtual torque transmitting capacity, and control the output torque of the prime mover to achieve the virtual drive force.

In a non-limiting embodiment, the controller may be further configured to indicate the actual virtual gear stage or operating mode selected by the controller in the indicator when the virtual gear stage selected by operating the shift lever is rejected by the other control executed at the same time by the controller.

In a non-limiting embodiment, the control system may further comprise an acoustic vibrating device that informs the driver with specific information by emitting a voice message or a sound effect, or causing a vibration. The controller may be further configured to notify the driver with the rejection of the virtual gear stage by emitting the voice message or the sound effect, or causing the vibration by the acoustic vibrating device, when the virtual gear stage selected by operating the shift lever is rejected by the other control executed at the same time by the controller.

In a non-limiting embodiment, the controller may be further configured to notify the driver with an acceptance of the virtual gear stage selected by operating the shift lever by emitting the voice message or the sound effect, or causing the vibration by the acoustic vibrating device.

Thus, the control system according to the exemplary embodiment of the present invention is applied to the electric vehicle propelled by the output torque of the motor serving as a prime mover. In order to allow the driver to virtually enjoy a manual shifting operation of the conventional vehicle having a transmission and an internal combustion engine, according to the exemplary embodiment of the present invention, the drive force to propel the electric vehicle derived from the output torque of the motor is changed stepwise by operating the shifting device. Specifically, the shifting device has the H-shaped first shift gate in which the first home is connected to each of the shift positions through the slots, and the shift lever is pivoted by the driver to the desired shift position through the slots so as to shift the virtual gear stage. The shift lever pivoted to the desired shift position in the first shift gate returns automatically to the first home when the shift lever is released from a hand of the driver. Therefore, unlike the conventional alternate type or stationary type shifting device, the shifting device is electrically connected with the controller through a shift-by-wire system so that the controller controls the electric vehicle an incident signal transmitted thereto form the shifting device. Since the shifting device is not connected with the controller through a mechanical system, degree of design flexibility and control flexibility of the shifting device may be increased.

As described, the electric vehicle to which the control system according to the exemplary embodiment of the present invention is applied is provided with the indicator indicating the currently selected virtual gear stage or the operating mode. In the conventional vehicle having a manual transmission, a shift lever stays at a desired position after moved thereto so that the driver is allowed to recognize a current gear stage based on a position of the shift lever. Whereas, in the electric vehicle to which the control system according to the exemplary embodiment of the present invention is applied, the shift lever pivoted to the desired shift position in the first shift gate returns automatically to the first home after released. In the electric vehicle to which the control system according to the exemplary embodiment of the present invention is applied, therefore, the current virtual gear stage or operating mode is indicated in the indicator even after the shift lever returns to the first home. Thus, the driver is allowed to confirm the current virtual gear stage or the operating mode based on the information indicated in the indicator.

Moreover, in the electric vehicle to which the control system according to the exemplary embodiment of the present invention is applied, the virtual gear stage is shifted by operating the shift lever, and the drive force to propel the vehicle is controlled with reference to the torque map corresponding to the selected virtual gear stage. According to the exemplary embodiment of the present invention, therefore, the driver is allowed to virtually enjoy the manual shifting operation of the conventional vehicle having an internal combustion engine and a manual transmission.

Furthermore, in the electric vehicle to which the control system according to the exemplary embodiment of the present invention is applied, the operating mode may be shifted between the manual shifting mode in which the virtual gear stage is selected manually and the automatic mode in which the drive force is controlled automatically by moving the shift lever between the first home and the second home along the connection gate. In the shifting device, the shift lever moved along the connection gate stays at the first home or the second home after released. Therefore, the driver is allowed to shift the operating mode between the manual shifting mode and the automatic mode easily by moving the shift lever along the connection gate. In addition, the driver is allowed to confirm the current operating mode based on the position of the shift lever.

As also described, in the shifting device, the connection gate includes the horizontal slot and the longitudinal slot. Specifically, the connection gate is bent into an L-shape, and the first home and the second home are located at each end of the connection gate. That is, the shift lever has to make a turn at a corner between the horizontal slot and the longitudinal slot when moved between the first home and the second home. Therefore, the operating mode will not be shifted between the manual shifting mode and the automatic mode unintentionally or erroneously.

Moreover, the shifting device is provided with the actuator for moving the shift lever compulsory from the first home to the second home through the connection gate. For example, the actuator moves the shift lever from the first home to the second home to shift the operating mode compulsory from the manual shifting mode to the automatic mode when an ignition switch or a main switch is turned off or when the parking mode is selected by the driver, that is, when the operation of the vehicle is terminated intentionally by the driver. Therefore, the vehicle may be launched smoothly in the automatic mode when restarting the vehicle after terminating the operation of the vehicle. In addition, when the virtual gear stage selected by operating the shift lever in the manual shifting mode is rejected by the controller in the specific condition of the motor or the electric vehicle, the actuator shifts the operating mode compulsory from the manual shifting mode to the automatic mode. Therefore, even if the operating mode selected by manually operating the shift lever in the manual shifting mode does not conform to the operating mode selected by the controller in the automatic mode, the shift lever is moved compulsory to the second home so that the position of the shift lever always conform to the actual operating mode selected by the controller.

In addition, the electric vehicle to which the control system according to the exemplary embodiment of the present invention is applied is provided with the imitation clutch pedal, and the shift lever is allowed to move in conjunction with an operation of the imitation clutch pedal. The controller is configured to change the virtual torque transmitting capacity in accordance with a depression of the imitation clutch pedal, and to change the virtual engine torque in accordance with a change in the virtual torque transmitting capacity. According to the exemplary embodiment of the present invention, therefore, the driver is allowed to virtually enjoy the manual shifting operation and the behaviors of the conventional vehicle having an internal combustion engine and a manual transmission.

Moreover, in the case that the virtual gear stage selected by operating the shift lever in the manual shifting mode is rejected in the specific condition of the vehicle or the motor, the actual virtual gear stage or operating mode selected by the controller after rejecting the virtual gear stage selected by operating the shift lever is indicated in the indicator. That is, even if the virtual gear stage or operating mode different from the virtual gear stage manually selected by the driver is selected by the controller, the actual virtual gear stage or operating mode is always indicated in the indicator. Therefore, the driver is allowed to visually confirm the current virtual gear stage or operating mode based on the information indicated in the indicator even if the virtual gear stage manually selected by the driver is rejected.

Further, in the case that the virtual gear stage selected by operating the shift lever in the manual shifting mode is rejected, the acoustic vibrating device including the speaker and the vibrator emits a voice message or a sound effect, or causing a vibration. Therefore, driver is certainly notified of the rejection of the virtual gear stage.

Furthermore, the acoustic vibrating device also emits a different sound effect or causes a different vibration when the virtual gear stage manually selected by operating the shift lever 18 is accepted. Therefore, the driver is certainly notified of the acceptance of the virtual gear stage.

Thus, according to the exemplary embodiment of the present invention, the driver is allowed to virtually enjoy the manual shifting operation and the behaviors of the conventional vehicle having an internal combustion engine and a manual transmission. In addition, the driver is allowed to confirm the actual virtual gear stage or operating mode selected by the controller even when the virtual gear stage selected manually by the driver is rejected in a specific condition.

### BRIEF DESCRIPTION OF THE DRAWINGS

Features, aspects, and advantages of exemplary embodiments of the present invention will become better understood with reference to the following description and accompanying drawings, which should not limit the invention in any way.
Fig. 1 is a schematic illustration showing a structure of the electric vehicle to which the control system according to the exemplary embodiment of the present invention is applied;
Fig. 2 is a map for determining a required drive torque to be generated by the motor based on a speed of the electric vehicle and a depression of an accelerator pedal;
Fig. 3 is a graph indicating the required drive torques in each virtual gear stage given that a depression of the accelerator pedal is 50%;
Fig. 4 is a top view showing a structure of a first shift gate of a shifting device;
Fig. 5 is a top view showing structures of the first shift gate, a connection gate, and a second shift gate of the shifting device;
Fig. 6 is a front view showing a digital indicator for indicating the selected virtual gear stage arranged in a tachometer;
Fig. 7 is a block diagram showing incident signals to the controller and command signals transmitted from the controller; and
Fig. 8 is a flowchart showing routine executed by the control system according to the exemplary embodiment of the present disclosure.

### DETAILED DESCRIPTION OF THE PREFERRED EMBODIMENT(S)

Embodiments of the present disclosure will now be explained with reference to the accompanying drawings. Note that the embodiments shown below are merely examples of the present disclosure which should not limit a scope of the present disclosure.

The control system according to the exemplary embodiment of the present invention is applied to an electric vehicle having at least one motor serving as a prime mover. Otherwise, the control system according to the exemplary embodiment of the present invention may also be applied to a hybrid vehicle in which a prime mover includes an engine and a motor. In any of those vehicles, an output torque of the motor is delivered to drive wheels to propel the vehicle, and a drive force to propel the vehicle is controlled by manipulating an accelerator pedal.

In the electric vehicle to which the control system according to the exemplary embodiment of the present invention is applied, a driver is allowed to virtually enjoy a manual shifting operation and behaviors of the conventional vehicle having a transmission and an internal combustion engine.

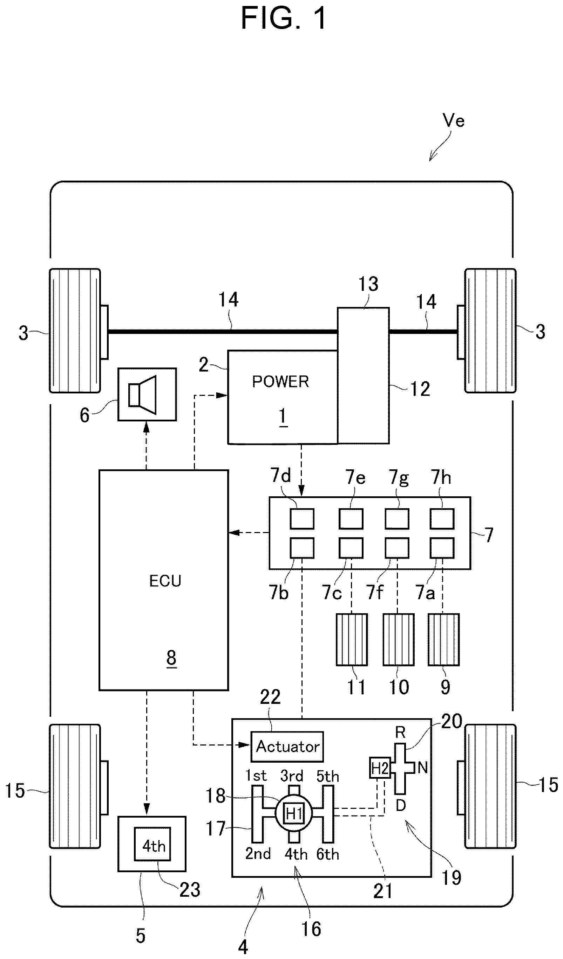

Referring now to Fig. 1, there is shown one example of a structure of an electric vehicle (hereinafter simply referred to as the vehicle) Ve to which the control system according to the embodiment of the present disclosure is applied. The vehicle Ve shown in Fig. 1 is an electric vehicle in which a motor 2 is adopted as a prime mover (referred to as POWER in Fig. 1)1. The vehicle Ve comprises, a pair of drive wheels 3, a shifting device 4, an indicator 5, an acoustic vibrating device 6, a detector 7, and a controller (referred to as ECU in Fig. 1) 8. Although not shown in Fig. 1, one or more extra motor(s) may be arranged in the vehicle Ve in addition to the motor 2. Instead, the control system according to the embodiment of the present disclosure may also be applied to a hybrid vehicle comprising a prime mover including an engine and a motor, a power split mechanism, and a transmission (neither of which are shown).

For example, a permanent magnet synchronous motor and an induction motor may be adopted as the motor 2. That is, the motor 2 is a motor-generator that serves not only as a motor to generate torque when driven by electricity supplied thereto, but also as a generator to generate electricity when rotated by a torque applied thereto. In the vehicle Ve, specifically, a battery (not shown) is connected to the motor 2 through an inverter (not shown). Therefore, the motor 2 may be operated as a motor to generate drive torque to propel the vehicle Ve by supplying electricity to the motor 2 from the battery. Instead, the motor 2 may also be operated as a generator to generate electricity by rotating the motor 2 by a torque delivered from the drive wheels 3. In this case, the electricity generated by the motor 2 may be accumulated in the battery. A rotational speed and an output torque of the motor 2 is electrically controlled by a controller 8 as an electronic control unit. For example, a required drive force to propel the vehicle Ve is calculated based on a position of an accelerator pedal 9 operated by the driver and a speed of the vehicle Ve, and an output torque of the motor 2 is controlled based on a required drive torque as a target torque value of the motor 2 calculated to achieve the required drive force.

In order to allow the driver to virtually enjoy the manual shifting operation of the conventional vehicle having a transmission and an internal combustion engine, according to the exemplary embodiment of the present invention, the drive torque required for the motor 2 is determined with reference to a torque map selected in accordance with an operating mode and an after-mentioned virtual gear stage selected by manipulating the shifting device 4 in an after-mentioned manual shifting mode.

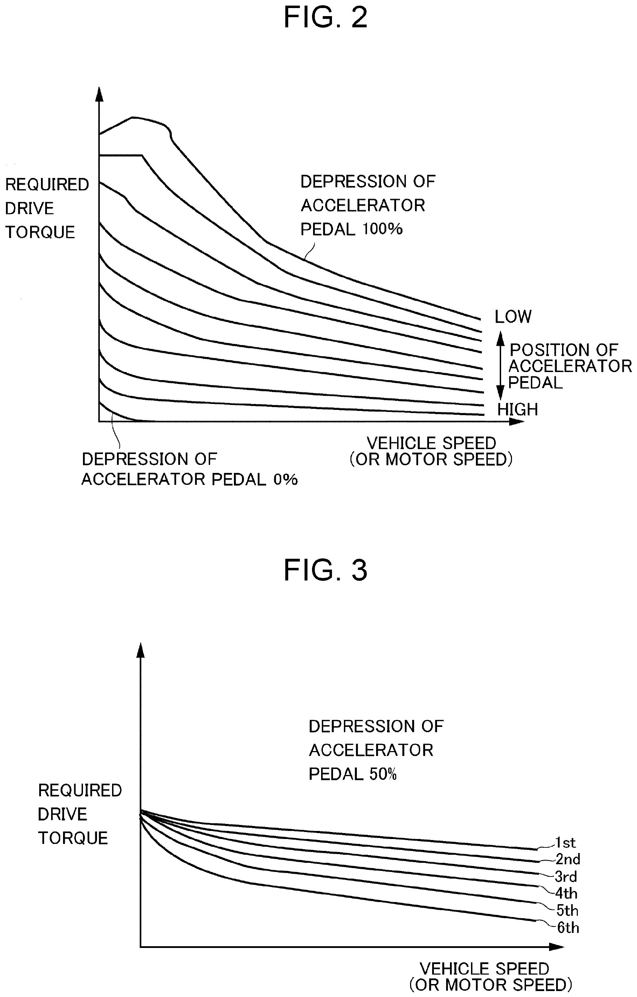

For example, the drive torque required for the motor 2 is determined with reference to the map shown in Fig. 2.

Specifically, Fig. 2 shows a torque map used to compute the required drive torque to be generated by the motor 2 in a drive mode selected by positioning an after-mentioned shift lever at a drive position. The torque map shown in Fig. 2 is configured to determine the required drive torque to be generated by the motor 2 based on the torque characteristics of the motor 2, in accordance with a speed of the vehicle Ve corresponding to the speed of the motor 2 and a position (i.e., a depression) of the accelerator pedal 9.

Such torque map shown in Fig. 2 is also prepared for each virtual gear stage, and each of the torque maps is configured to calculate the required drive torque in different values with respect to a predetermined depression of the accelerator pedal 9. Turning to Fig. 3, there are shown the required drive torques in each of the virtual gear stages given that a depression of the accelerator pedal is 50%. As shown in Fig. 3, in the manual shifting mode, the required drive torque changes stepwise depending on the virtual gear stage selected from the first to sixth stages. As explained later, those virtual gear stages are set to imitate the behaviors of the conventional vehicle having an engine and a transmission.

A drive force to propel the vehicle Ve and an acceleration of the vehicle Ve are controlled by manipulating the accelerator pedal 9. That is, the drive force to propel the vehicle Ve and the acceleration of the vehicle Ve are changed depending on a depression of the accelerator pedal 9. As an option, an accelerator lever (not shown) may also be arranged in the vehicle Ve.

In order to decelerate and stop the vehicle Ve, the vehicle Ve is provided with a brake pedal 10 or a brake lever (not shown) as an operating device of a brake device. That is, a braking force (or braking torque) to decelerate and stop the vehicle Ve is controlled by manipulating the brake pedal 10. In the example shown in Fig. 1, the brake pedal 10 is arranged in the vehicle Ve so that the braking force applied to the vehicle Ve is changed depending on a depression of the brake pedal 10.

In order to allow the driver to virtually enjoy the manual shifting operation of the conventional vehicle having an internal combustion engine and a transmission, an imitation clutch pedal (hereinafter simply referred to as the "clutch pedal")11 is arranged in the vehicle Ve. As described, the vehicle Ve to which the control system according to the exemplary embodiment of the present invention is applied is an electric vehicle, and hence the vehicle Ve is not provided with a manual transmission and a clutch that selectively interrupt a power transmission between the engine and the manual transmission. That is, the clutch pedal 11 is arranged in the vehicle Ve merely to allow the driver to virtually enjoy the manual shifting operation. To this end, the clutch pedal 11 is adapted to imitate a movement and an operational feeling of the conventional clutch pedal arranged in the vehicle having an engine and a transmission.

In the manual shifting mode, a shift lever 18 of the shifting device 4 may be allowed to move within the first shift gate 17 in conjunction with an operation of the clutch pedal 11. For example, the shift lever 18 may be allowed to move when the clutch pedal 11 is depressed to a predetermined degree. In addition, when the shift lever 18 is moved before the clutch pedal 11 is depressed to the predetermined degree, a behavior of the conventional vehicle having an internal combustion engine and a transmission in a situation where an interference between gears occurs may be imitated.

As described later, according to the exemplary embodiment of the present invention, the controller 8 is configured to change an after-mentioned virtual torque transmitting capacity in accordance with a depression of the clutch pedal 11, and to change the virtual engine torque in accordance with a change in the virtual torque transmitting capacity. For example, given that the clutch pedal 11 is not depressed, the controller 8 controls the motor 2 to generate the output torque possible to achieve the virtual engine torque calculated with reference to the torque map corresponding to the current virtual gear stage selected by operating the shifting device 4. By contrast, given that the clutch pedal 11 is fully depressed, the controller 8 reduces the output torque of the motor 2 to almost zero thereby reducing the torque rotating the drive wheels 3 to zero.

Specifically, the vehicle Ve illustrated in Fig. 1 is a front-wheel-drive layout vehicle in which an output torque of the motor 2 serving as the prime mover 1 is delivered to a pair of front wheels as the drive wheels 3 through a reduction gear unit 12, a differential gear unit 13, and driveshafts 14 to establish drive force to propel the vehicle Ve. Otherwise, the control system according to the embodiment of the present invention may also be applied to a rear-wheel-drive layout vehicle in which an output torque of the prime mover 1 is delivered to a pair of rear wheels 15 through a propeller shaft (not shown) to establish drive force to propel the vehicle Ve. In addition, the control system according to the embodiment of the present invention may also be applied to a four-wheel-drive layout vehicle in which an output torque of the prime mover 1 is delivered to both pair of the front wheels 3 and the rear wheels 15 through a transfer (not shown) to propel the vehicle Ve.

The shift lever 18 of the shifting device 4 is manipulated by the driver to select the operating mode and the virtual gear stage of the vehicle Ve, and the above-mentioned torque map is selected in accordance with the virtual gear stage selected by operating the shift lever 18. The vehicle Ve to which the control system according to the exemplary embodiment of the present invention is applied is not provided with a transmission employed in the conventional vehicle having an internal combustion engine. Accordingly, in the vehicle Ve, it is not necessary to operate the transmission in the manual shifting mode by manipulating the shift lever 18. Nonetheless, in order to allow the driver to virtually enjoy a manual shifting operation of the conventional vehicle having a transmission, the vehicle Ve is provided with the shifting device 4, and the torque maps are prepared to imitate the behavior of the conventional vehicle. According to the exemplary embodiment of the present invention, the shifting device 4 is adapted to select the operating mode from the manual shifting mode and an automatic mode. In the manual shifting mode, the shift lever 18 is operated to select the virtual gear stage from a plurality of the virtual gear stages, and in the automatic mode, the shift lever 18 is operated to further select the operating mode from a drive mode, a neutral mode, and a reverse mode.

For these purposes, the shifting device 4 comprises a manual shifting section 16 in which the shift lever 18 is operated to select the virtual gear stage in the manual shifting mode.

In the manual shifting mode, the output torque of the motor 2 serving as the prime mover 1 is controlled with reference to the torque map corresponding to the virtual gear stage selected by operating the shift lever 18 so that the drive force to propel the vehicle Ve is changed stepwise by shifting the virtual gear stage by operating the shift lever 18.

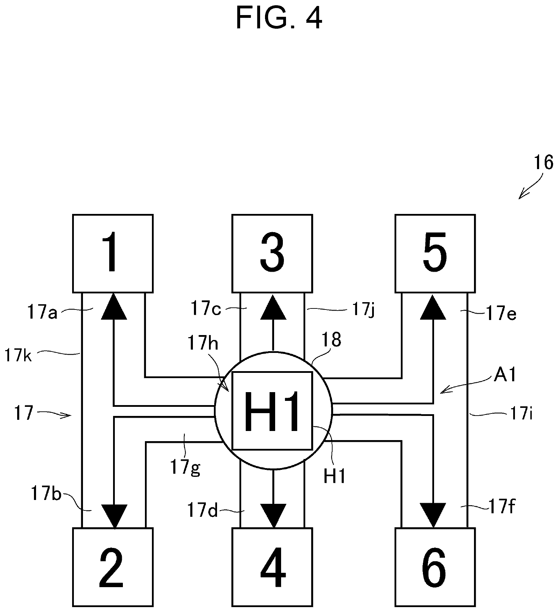

As illustrated in Fig. 4, the manual shifting section 16 comprises a first shift gate 17, and the shift lever 18 is pivoted within the first shift gate 17 to select the virtual gear stage. That is, the vehicle Ve is operated in the manual mode by operating the shift lever 18 in the manual shifting section 16.

In the first shift gate 17 as a guide slot, a first home H1 is located at the center of the guide slot, and the shift lever 18 is moved from the first home H1 or pivoted around the first home H1 along the guide slot toward shift positions located at each end of the guide slot. As explained later, the shift lever 18 moved to the desired shift position returns automatically to the first home H1 when an operating force applied to the shift lever 18 is cancelled.

As illustrated in Fig. 4, the first shift gate 17 has an H-shaped six-speed shift pattern including a right longitudinal slot 17i, a middle longitudinal slot 17j, a left longitudinal slot 17k, and a horizontal slot 17g connecting intermediate portions of the longitudinal slots 17i, 17j, and 17k. In the first shift gate 17, a first position at which the first virtual gear stage is selected is located at a front end 17a of the left longitudinal slot 17k, a second position at which the second virtual gear stage is selected is located at a rear end 17b of the left longitudinal slot 17k, a third position at which the third virtual gear stage is selected is located at a front end 17c of the middle longitudinal slot 17j, a fourth position at which the fourth virtual gear stage is selected is located at a rear end 17d of the middle longitudinal slot 17j, a fifth position at which the fifth virtual gear stage is selected is located at a front end 17e of the right longitudinal slot 17i, a sixth position at which the sixth virtual gear stage is selected is located at a rear end 17f of the right longitudinal slot 17i, and the first home H1 is located at a center 17h of the first shift gate 17 between the third position and the fourth position.

The shift lever 18 is moved by the driver within the first shift gate 17 along the arrows A1 shown in Fig. 4 to shift the virtual gear stage to a desired stage. As described, the shift lever 18 is adapted to perform a momentary action within the first shift gate 17 so that the shift lever 18 moved to any one of the shift positions returns automatically to the first home H1 as an initial position when an operating force applied to the shift lever 18 is cancelled. That is, the shift lever 18 automatically returns to the first home H1 after the operating force applied thereto is cancelled or reduced every time it is moved to the desired shift position.

In other words, the shift lever 18 automatically returns to the first home H1 after the shift lever 18 is released from a hand of the driver. Therefore, unlike the conventional alternate type or stationary type shifting device, the shifting device 4 is electrically connected with the controller 8 through a shift-by-wire system so that the controller 8 performs a calculation to control the vehicle Ve based on an incident signal transmitted thereto form the shifting device 4. Since the shifting device 4 is not connected with the controller 8 through a mechanical system, degree of design flexibility and control flexibility of the shifting device 4 may be increased.

The vehicle Ve according to the exemplary embodiment of the present invention may be adapted to propel only in the manual shifting mode. In this case, the shifting device 4 is provided only with the manual shifting section 16, and a reverse position may be arranged in a predetermined site in the manual shifting section 16. Otherwise, the operating mode of the vehicle Ve may also be selected from the manual shifting mode and the automatic mode in which the drive force to propel the vehicle Ve is controlled automatically as in the conventional electric vehicles. In this case, as illustrated in Fig. 1, the shifting device 4 comprises the manual shifting section 16 and an automatic section 19.

In the automatic mode, the operating mode of the vehicle Ve may be selected form a drive mode, a reverse mode, and a neutral mode. In the drive mode and the reverse mode, the drive force to propel the vehicle Ve is changed continuously and steplessly by controlling an output torque of the motor 2 serving as the prime mover 1 based on a required drive force.

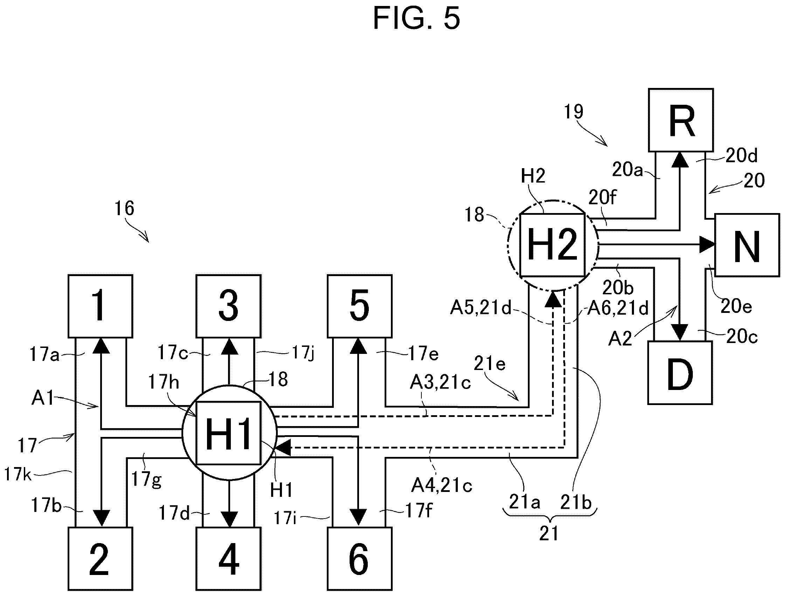

The automatic mode is selected by moving the shift lever 18 into the automatic section 19. Turning to Fig. 5, there is shown an example of the shifting device 4 having the manual shifting section 16 and the automatic section 19. As illustrated in Fig. 5, the automatic section 19 comprises a second shift gate 20 and a connection gate 21. In the example shown in Figs. 1, 4 and 5, the shift lever 18 is used commonly in the manual shifting section 16 and the automatic section 19. That is, the shift lever 18 is allowed to move within the first shift gate 17, the connection gate 21, and the second shift gate 20.

As illustrated in Fig. 5, a reverse position, a neutral position, a drive position, and a second home H2 are arranged in the second shift gate 20. In the second shift gate 20, the shift lever 18 also performs a momentary action. That is, the shift lever 18 moved to a desired position in the second shift gate 20 also returns automatically to the second home H2 after the operating force applied thereto is cancelled.

Specifically, the second shift gate 20 includes a longitudinal slot 20a and a horizontal slot 20b orthogonally crossing the longitudinal slot 20a. In the second shift gate 20, a drive position at which the drive mode is selected is located at a rear end 20c of the longitudinal slot 20a, a reverse position at which the reverse mode is selected is located at a front end 20d of the longitudinal slot 20a, a neutral position at which the neutral mode is selected is located at a right end 20e of the horizontal slot 20b, and the second home H2 is located at a left end 20f of the horizontal slot 20b.

The shift lever 18 is moved by the driver within the second shift gate 20 along the arrows A2 shown in Fig. 5 to shift the operating mode to a desired mode. As described, the shift lever 18 moved to the desired position in the second shift gate 20 also returns automatically to the second home H2 when an operating force applied to the shift lever 18 is cancelled. That is, the shift lever 18 automatically returns to the second home H2 after the operating force applied thereto is cancelled or reduced every time it is moved to the desired position.

The first home H1 in the first shift gate 17 of the manual shifting section 16 and the second home H2 in the second shift gate 20 of the automatic section 19 are connected to each other through the connection gate 21.

Specifically, as illustrated in Fig. 5, the connection gate 21 includes a horizontal slot 21a and a longitudinal slot 21b. The horizontal slot 21a extends horizontally from the right end of the horizontal slot 17g of the first shift gate 17. That is, the horizontal slot 21a is connected to the first home H1 in the first shift gate 17 through the horizontal slot 17g of the first shift gate 17. The shift lever 18 is moved by the driver within the horizontal slot 21a along the dashed arrows A3 and A4 indicating operating directions 21c of the shift lever 18 moved toward and away from the first home H1.

On the other hand, the longitudinal slot 21b extends longitudinally from a leading end of the horizontal slot 21a to be connected to the second home H2. That is, the horizontal slot 17g of the first shift gate 17 is connected to the second home H2 in the second shift gate 20 through the horizontal slot 21a and the longitudinal slot 21b. The shift lever 18 is moved by the driver within the longitudinal slot 21b along the dashed arrows A5 and A6 indicating operating directions 21d of the shift lever 18 moved toward and away from the second home H2. Thus, the connection gate 21 is bent such that the shift lever 18 makes a turn when moved between the first home H1 of the manual shifting section 16 and the second home H2 of the automatic section 19.

The shifting device 4 is configured such that the shift lever 18 performs an alternate action (or stationary action) between the first home H1 and the second home H2. Specifically, the shift lever 18 performs an alternate action within the connection gate 21 and a part of the horizontal slot 17g of the first shift gate 17.

That is, in a case that the shift lever 18 is moved from the second home H2 to the first home H1, the shift lever 18 stays at the first home H1 even after the operating force applied to the shift lever 18 is cancelled. Likewise, in a case that the shift lever 18 is moved from the first home H1 to the second home H2, the shift lever 18 stays at the second home H2 even after the operating force applied to the shift lever 18 is cancelled. Therefore, the driver is allowed to shift the operating mode between the manual shifting mode and the automatic mode easily by moving the shift lever 18 along the connection gate 21 and the part of the horizontal slot 17g. Further, the driver is allowed to confirm the current operating mode based on the position of the shift lever 18.

In addition, the connection gate 21 is bent such that the shift lever 18 makes a turn when moved between the first home H1 of the manual shifting section 16 and the second home H2 of the automatic section 19. That is, when the shift lever 18 is moved between the first home H1 of the manual shifting section 16 and the second home H2 of the automatic section 19, it is necessary to change an operating direction of the shift lever 18 at a corner 21e between the horizontal slot 21a and the longitudinal slot 21b. Therefore, the operating mode will not be shifted between the manual shifting mode and the automatic mode erroneously. As an option, in order to certainly prevent such an unintentional shifting operation between the manual shifting mode and the automatic mode, an additional device for restricting a movement of the shift lever between the first home H1 and the second home H2 may be arranged in the shifting device 4. To this end, for example, an additional mechanism (not shown) that allows the shift lever 18 to be moved between the first home H1 and the second home H2 by pressing a canceller button or by pulling or pushing a collar (neither of which are shown) may be arranged in the shifting device 4.

Furthermore, in the manual shifting section 16, a reaction force against an operating force moving the shift lever 18 from the first home H1 to each end 17 17a, 17b, 17c, 17d, 17e, and 17f of the first shift gate 17 may be changed stepwise. For example, the reaction force applied to the shift lever 18 being operated may be increased in the vicinity of each end 17a, 17b, 17c, 17d, 17e, and 17f of the first shift gate 17 to be greater than that in the vicinity of the first home H1. Likewise, in the automatic section 19, a reaction force against an operating force moving the shift lever 18 from the second home H2 to each end 20c, 20d, and 20e of the second shift gate 20 may be changed stepwise. For example, the reaction force applied to the shift lever 18 being operated may be increased in the vicinity of each end 20c, 20d, and 20e of the second shift gate 20 to be greater than that in the vicinity of the second home H2. In this case, the driver is allowed to perceive a fact that the shift lever 18 comes close to the shift position based on a change in the reaction force applied to the shift lever 18 against the operating force moving the shift lever 18.

The operating mode may be shifted from the automatic mode to the manual shifting mode only in the situation where the drive mode is selected in the automatic mode. That is, the shift lever 18 is allowed to move from the second home H2 to the first home H1 only during propulsion in the drive mode of the automatic mode. As described, in the manual shifting mode, the virtual gear stage to propel the vehicle Ve in the forward direction is selected by operating the shift lever 18. Therefore, the operating mode may be shifted smoothly to the manual shifting mode by shifting the operating mode from the drive mode to the manual shifting mode.

The shifting device 4 is provided with an actuator 22 that moves the shift lever 18 from the first home H1 to the second home H2 through the connection gate 21. In the example shown in Fig. 1, an electric motor is adopted as the actuator 22. Specifically, the actuator 22 is controlled by the controller 8 to move the shift lever 18 compulsory from the first home H1 to the second home H2. That is, the actuator 22 is actuated to shift the operating mode of the vehicle Ve compulsory from the manual shifting mode to the automatic mode. For example, the actuator 22 is actuated to shift the operating mode compulsory from the manual shifting mode to the automatic mode when an ignition switch or a main switch (neither of which are shown) is turned off or when the parking mode is selected by the driver, that is when the operation of the vehicle Ve is terminated intentionally by the driver. Therefore, the vehicle Ve may be launched smoothly in the automatic mode when restarting the vehicle Ve after the terminating the operation of the vehicle Ve.

In addition, when the virtual gear stage selected by operating the shift lever 18 in the manual shifting mode is rejected by other control executed at the same time by the controller 8, the controller 8 shifts the operating mode of the vehicle Ve compulsory from the manual shifting mode to the automatic mode by actuating the actuator 22. Therefore, even if the operating mode selected by manually operating the shift lever 18 in the manual shifting mode does not conform to the operating mode selected by the controller 8 in the automatic mode, the shift lever 18 is moved compulsory to the second home H2 so that the position of the shift lever 18 always conforms to the actual operating mode selected by the controller 8 (i.e., the automatic mode).

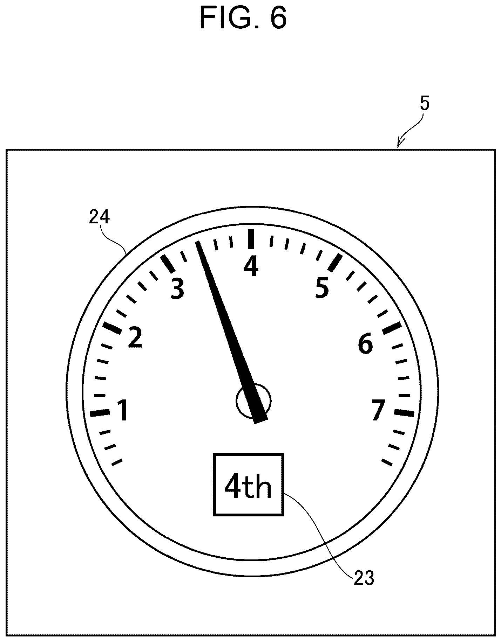

As illustrated in Fig. 6, the indicator 5 is a digital indicator comprising an imitation tachometer 24 that indicates an after-mentioned virtual engine speed, and a digital display 23 that numerically indicates the currently selected virtual gear stage. In order to inform the driver with the current virtual gear stage or operating mode, a monitor or a lamp (neither of which are shown) may be employed instead of the digital display 23. Otherwise, the current virtual gear stage or operating mode may also be indicated in a display of a navigation system (not shown) if available.

As described, in the manual shifting section 16, the shift lever 18 moved to the desired shift position returns automatically to the first home H1, therefore, the driver may not confirm the current virtual gear stage based on a position of the shift lever 18. Nonetheless, according to the exemplary embodiment of the present invention, the virtual gear stage selected by operating the shift lever 18 is indicated in the indicator 5 even after the shift lever 18 returns to the first home H1. Therefore, the driver is allowed to visually confirm the current virtual gear stage based on the information indicated in the indicator 5.

As described, the virtual gear stage selected by operating the shift lever 18 in the manual shifting mode may be rejected and the operating mode may be shifted compulsory to the automatic mode in a case that the controller 8 executes other kind of control to control the motor 2 in a specific condition of the vehicle Ve simultaneously with the operation of the shift lever 18. In this case, the actual operating mode selected by the controller 8 after rejecting the virtual gear stage selected by operating the shift lever 18 is indicated in the indicator 5. That is, even if the operating mode different from the virtual gear stage manually selected by the driver is selected by the controller 8, the actual operating mode is always indicated in the indicator 5. Therefore, the driver is allowed to visually confirm the current operating mode based on the information indicated in the indicator 5 even if the virtual gear stage manually selected by the driver is rejected.

The acoustic vibrating device 6 includes a speaker and a vibrator (neither of which are shown) to inform the driver with the specific information by emitting a voice message or a sound effect, or causing a vibration. The acoustic vibrating device 6 is controlled by the controller 8, and for example, the acoustic vibrating device 6 emits a warning tone or causes a vibration when the virtual gear stage manually selected by operating the shift lever 18 is rejected by the controller 8. Therefore, the driver is certainly notified of the rejection of the virtual gear stage.

In addition, the acoustic vibrating device 6 also emits a different sound effect or causes a different vibration when the virtual gear stage manually selected by operating the shift lever 18 is accepted. Therefore, the driver is certainly notified of the acceptance of the virtual gear stage.

In order to control the vehicle Ve, the detector 7 collects various kinds of data and information. To this end, the detector 7 includes a power source, a microcomputer, various kinds of sensors, and an input/output interface. For example, according to the exemplary embodiment of the present invention, the detector 7 detects data relating to a shift position of the shifting device 4, and data for controlling the motor 2, the indicator 5, the acoustic vibrating device 6, and the actuator 22.

Specifically, the detector 7 includes an accelerator sensor 7a that detects a position (or depression) of the accelerator pedal 9, a shift position sensor 7b that detects a position of the shift lever 18 of the shifting device 4, a clutch position sensor 7c that detects a position (or depression) of the clutch pedal 11, a wheel speed sensor 7d that detects a speed of the vehicle Ve, a motor speed sensor (or resolver) 7e that detects a speed of the motor 2, a motor torque sensor 7f that detects or calculates a torque of the motor 2, a brake sensor 7g that detects a position (or depression) of the brake pedal 10 or a pedal force applied to the brake pedal 10, and an acceleration sensor 7h that detects an acceleration of the vehicle Ve. In addition, the detector 7 further includes a motor temperature sensor that detects a temperature of the motor 2, an SOC sensor that detects a state of charge level of the battery, and a battery temperature sensor that detects a temperature of the battery (neither of which are shown). The detector 7 is electrically connected with the controller 8 so that the data detected by the above-mentioned sensors is transmitted to the controller 8 in the form of electric signal.

The controller 8 for controlling the vehicle Ve is an electronic control unit comprising a microcomputer. According to the exemplary embodiment of the present invention, the controller 8 is configured to control the motor 2 of the prime mover 1 in accordance with a position of the shift lever 18 of the shifting device 4. In addition, the indicator 5, the acoustic vibrating device 6, and the actuator 22 are also controlled by the controller 8.

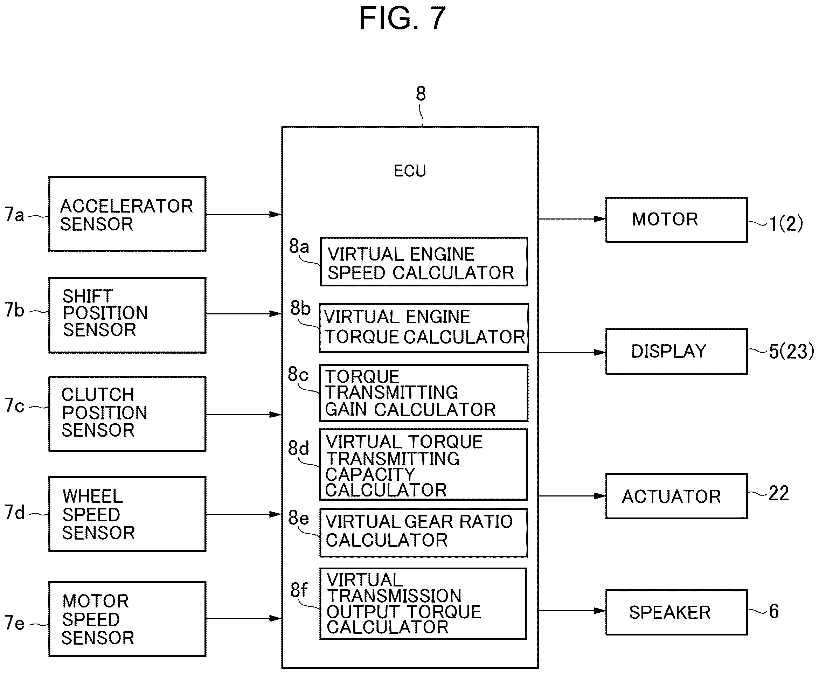

As shown in Fig. 7, the controller 8 comprises a virtual engine speed calculator 8a, a virtual engine torque calculator 8b, a torque transmitting gain calculator 8c, a virtual torque transmitting capacity calculator 8d, a virtual gear ratio calculator 8e, and a virtual transmission output torque calculator 8f. In order to imitate the behaviors of the conventional vehicle having an engine and a transmission, the controller 8 performs calculations based on the data transmitted thereto from e.g., the accelerator sensor 7a, the shift position sensor 7b, the clutch position sensor 7c, the wheel speed sensor 7d, and the motor speed sensor 7e, and data and formulas stored in advance.

Calculation results are transmitted from the controller 8 in the form of command signals to the motor 2 of the prime mover 1, the display 23 of the indicator 5, the actuator 22, and the acoustic vibrating device 6. Although only one controller 8 is shown in Figs. 1 and 7, a plurality of controllers 8 may also be arranged in the vehicle Ve to control different devices individually, or to perform different controls individually.

Specifically, the controller 8 is configured to compute a virtual engine speed, a virtual engine torque, a torque transmitting gain, a virtual torque transmitting capacity, a virtual transmission output torque and so on, based on an assumption that the vehicle Ve has a conventional internal combustion engine and a conventional manual transmission. Then, the controller 8 calculates a virtual drive force to propel the vehicle Ve based on the virtual engine torque calculated based on a position of the accelerator pedal 9 with reference to the torque map corresponding to the virtual gear stage selected by operating the shift lever 18, and the virtual torque transmitting capacity calculated based on a position of the clutch pedal 11. Thereafter, the controller 8 controls the output torque of the motor 2 to achieve the virtual drive force.

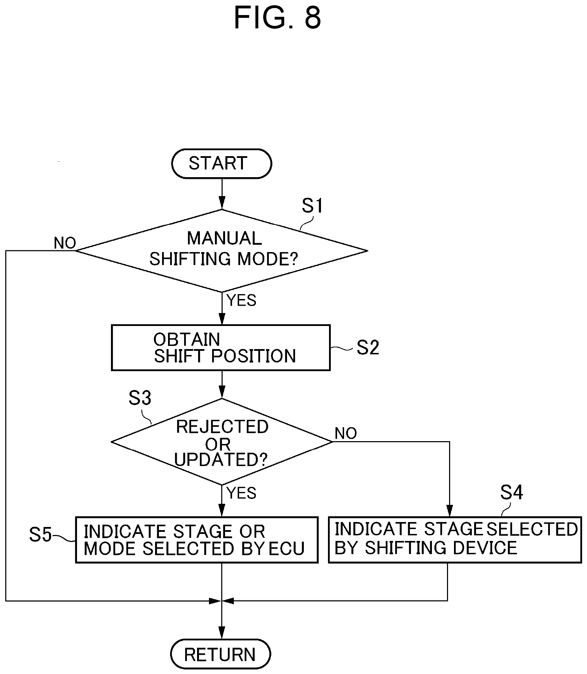

Thus, the control system according to the exemplary embodiment of the present invention is applied to the electric vehicle Ve without having a manual transmission, and in the vehicle Ve, the driver is virtually allowed to enjoy the manual shifting operation. As described, the shift lever 18 of the shifting device 4 is adapted to perform a momentary action, and the shifting device 4 is electrically connected with the controller 8 through the shift-by-wire system. Therefore, the virtual gear stage selected manually by operating the shift lever 18 may be rejected in a specific condition of the vehicle Ve, and in this case, the controller 8 will select another virtual gear stage or operating mode that is appropriate to propel the vehicle Ve in the current condition of the vehicle Ve. In this situation, the driver may be confused if the actual virtual gear stage or operating mode currently selected is not indicated correctly in the indicator 5. In order to prevent such disadvantage, the controller 8 is configured to execute the routine shown in Fig. 8.

The routine shown in Fig. 8 is executed continuously during propulsion of the vehicle Ve. At step S1, it is determined whether the manual shifting mode is selected based on a position of the shift lever 18. Specifically, it is determined whether the shift lever 18 is positioned at the first home H1 based on a detection signal transmitted from the shift position sensor 7b.

If the manual shifting mode is not selected, that is, if the automatic mode is currently selected so that the answer of step S1 is NO, the routine returns.

By contrast, if the manual shifting mode is not selected so that the answer of step S1 is YES, the routine progresses to step S2 to obtain information about the virtual gear stage selected manually by operating the shift lever 18.

As described, the data relating to the current virtual gear stage is detected by the shift position sensor 7b and transmitted to the controller 8.

Then, it is determined at step S3 whether the virtual gear stage selected by operating the shift lever 18 is rejected. In other words, it is determined at step S3 whether the virtual gear stage selected by operating the shift lever 18 is changed or updated by the controller 8. As described, the virtual gear stage selected manually by operating the shift lever 18 may be rejected if the selected virtual gear stage is not appropriate under the current operating condition of the vehicle Ve or the motor 2, and in this case, the virtual gear stage is returned to the prior stage or shifted to another stage or mode that is appropriate to operate the vehicle Ve or the motor 2 under the current operating condition. Therefore, such determination at step S3 is made so as to correctly indicate the actual virtual gear stage or operating mode in the indicator 5.

If the virtual gear stage selected by operating the shift lever 18 is not rejected or changed by the controller 8 so that the answer of step S3 is NO, the routine progresses to step S4 to indicate the virtual gear stage selected by operating the shift lever 18 in the indicator 5.

Thereafter, the routine returns.

By contrast, if the virtual gear stage selected by operating the shift lever 18 is rejected or changed by the controller 8 so that the answer of step S3 is YES, the routine progresses to step S5 to indicate the virtual gear stage or operating mode selected or changed by the controller 8 in the indicator 5.

Thereafter, the routine returns.

As described, in the vehicle Ve to which the control system according to the exemplary embodiment of the present invention is applied, the driver is allowed to enjoy the manual shifting operation by operating the shift lever 18 of the shifting device 4 in the manual shifting mode. The shifting device 4 has the H-shaped first shift gate 17 in which the first home H1 is located at the center of the first shift gate 17, and the shift lever 18 is moved from the first home H1 along the guide slot toward shift positions located at each end of the guide slot. The shift lever 18 moved to the desired shift position returns automatically to the first home H1 when an operating force applied to the shift lever 18 is cancelled. Therefore, the shifting device 4 is electrically connected with the controller 8 through the shift-by-wire system. Since the shifting device 4 is not connected with the controller 8 through a mechanical system, degree of design flexibility and control flexibility of the shifting device 4 may be increased compared to those of the conventional shifting devices in which a shift lever is adapted to perform an alternate action.

Since the shift lever 18 moved to the desired shift position returns automatically to the first home H1, the driver may not confirm the current virtual gear stage based on a position of the shift lever 18. Nonetheless, according to the exemplary embodiment of the present invention, the virtual gear stage selected by operating the shift lever 18 is indicated in the indicator 5 even after the shift lever 18 returns to the first home H1. Therefore, the driver is allowed to visually confirm the current virtual gear stage based on the information indicated in the indicator 5.

In the case that the virtual gear stage selected by operating the shift lever 18 in the manual shifting mode is rejected in the specific condition of the vehicle Ve or the motor 2, the actual virtual gear stage or operating mode selected by the controller 8 is indicated in the indicator 5. Therefore, the driver is allowed to visually confirm the current virtual gear stage or operating mode based on the information indicated in the indicator 5 even if the virtual gear stage manually selected by the driver is rejected.

Thus, according to the exemplary embodiment of the present invention, the driver is allowed to virtually enjoy the manual shifting operation. In addition, the driver is allowed to certainly conform the virtual gear stage and the operating mode even if the virtual gear stage selected manually is rejected in a specific condition.

## Claims

1. A control system for an electric vehicle (Ve) comprising a motor (2) configured to serve as a prime mover (1), and a shifting device (4) to be operated manually by a driver,
wherein a drive force to propel the electric vehicle (Ve) is established by delivering an output torque of the prime mover (1) to a drive wheel (3), and
the drive force is controlled by controlling the output torque of the prime mover (1) in accordance with the operation of the shifting device (4),
**characterized in that**:
the shifting device (4) comprises
a first shift gate (17) in which a first home (H1) is connected to each shift position through a plurality of slots (17i, 17j, 17k, 17g), and
a shift lever (18) configured to be moved by the driver to a desired shift position through the slots (17i, 17j, 17k, 17g) of the first shift gate (17), and to return automatically to the first home (H1) when an operating force applied thereto is cancelled;
the control system comprises an indicator (5) configured to indicate a predetermined information, and a controller (8) configured to control the electric vehicle (Ve); and
the controller (8) is configured to
control the electric vehicle (Ve) based on an electric signal transmitted from the shifting device (4), and
indicate the shift position to which the shift lever (18) is moved in the indicator (5).

2. The control system for the electric vehicle (Ve) as claimed in claim 1,
wherein the electric vehicle (Ve) further comprises an accelerator pedal (9) to be operated by the driver to control the drive force to propel the electric vehicle (Ve),
the shift lever (18) is configured to be moved by the driver to the desired shift position to select a virtual gear stage from a plurality of stages corresponding to the respective shift positions in the first shift gate (17), and
the controller (8) is further configured to
calculate a virtual drive force to propel the electric vehicle (Ve) based on a virtual engine torque calculated based on a position of the accelerator pedal (9) with reference to a torque map corresponding to the virtual gear stage selected by operating the shift lever (18), and
control the output torque of the prime mover (1) to achieve the virtual drive force.

3. The control system for the electric vehicle (Ve) as claimed in claim 2,
wherein an operating mode of the electric vehicle (Ve) is selected from
a manual shifting mode in which the virtual gear stage is selected manually by operating the shift lever (18) within the first shift gate (17), and the drive force to propel the vehicle (Ve) is controlled by controlling the output torque of the prime mover (1) in accordance with the selected virtual gear stage, and
an automatic mode in which the operating mode is further selected from a plurality of modes, and the drive force to propel the vehicle (Ve) is controlled by controlling the output torque of the prime mover (1) based on a required drive force to propel the vehicle (Ve),
the shifting device (4) further comprises
a second shift gate (20) in which a second home (H2) is connected to each shift position corresponding to the respective operating modes available in the automatic mode through a plurality of slots (20a, 20b), and
a connection gate (21) connecting the first home (H1) and the second home (H2),
the shift lever (18) is allowed to move between the first home (H1) and the second home (H2) through the connection gate (21),
the manual shifting mode is selected by positioning the shift lever (18) at the first home (H1),
the automatic mode is selected by positioning the shift lever (18) at the second home (H2),
the operating mode of the electric vehicle (Ve) in the automatic mode is selected by operating the shift lever (18) within the second shift gate (20),
the shift lever (18) moved to the desired shift position through the slots (20a, 20b) of the second shift gate (20) is configured to return automatically to the second home (H2) when the operating force applied thereto is cancelled, and
the shift lever (18) moved between the first home (H1) and the second home (H2) through the connection gate (21) is configured to stay at the first home (H1) or the second home (H2) even after the operating force applied thereto is cancelled.

4. The control system for the electric vehicle (Ve) as claimed in claim 3, wherein the connection gate (21) includes a horizontal slot (21a) and a longitudinal slot (21b) so that the shift lever (18) makes a turn when moved between the first home (H1) and the second home (H2).

5. The control system for the electric vehicle (Ve) as claimed in claim 4,
wherein the shifting device (4) further comprises an actuator (22) configured to move the shift lever (18) from the first home (H1) to the second home (H2) through the connection gate (21), and
the controller (8) is further configured to shift the operating mode from the manual shifting mode to the automatic mode by actuating the actuator (22) to move the shift lever (18) from the first home (H1) to the second home (H2), when an operation of the vehicle (Ve) is terminated intentionally by the driver, or when the virtual gear stage selected by operating the shift lever (18) in the manual shifting mode is rejected by another control executed at the same time by the controller (8).

6. The control system for the electric vehicle (Ve) as claimed in claim 5, further comprising:
an imitation clutch pedal (11) to be operated by the driver,
wherein the shift lever (18) is allowed to move within the first shift gate (17) in conjunction with an operation of the imitation clutch pedal (11), and
the controller (8) is further configured to
calculate a virtual torque transmitting capacity in accordance with a depression of the imitation clutch pedal (11),
calculate the virtual drive force to propel the electric vehicle (Ve) based on the virtual engine torque and the virtual torque transmitting capacity, and
control the output torque of the prime mover (1) to achieve the virtual drive force.

7. The control system for the electric vehicle (Ve) as claimed in any of claims 1 to 6, wherein the controller (8) is further configured to indicate the actual virtual gear stage or operating mode selected by the controller (8) in the indicator (5) when the virtual gear stage selected by operating the shift lever (18) is rejected by the other control executed at the same time by the controller (8).

8. The control system for the electric vehicle (Ve) as claimed in claim 7, further comprising:
an acoustic vibrating device (6) configured to inform the driver with specific information by emitting a voice message or a sound effect, or causing a vibration,
wherein the controller (8) is further configured to notify the driver with the rejection of the virtual gear stage by emitting the voice message or the sound effect, or causing the vibration by the acoustic vibrating device (6), when the virtual gear stage selected by operating the shift lever (18) is rejected by the other control executed at the same time by the controller (8).

9. The control system for the electric vehicle (Ve) as claimed in claim 8, wherein the controller (8) is further configured to notify the driver with an acceptance of the virtual gear stage selected by operating the shift lever (18) by emitting the voice message or the sound effect, or causing the vibration by the acoustic vibrating device (6).
